(19) **Europäisches Patentamt**
**European Patent Office**
**Office européen des brevets**

(11) **EP 2 597 544 B1**

(12) **FASCICULE DE BREVET EUROPEEN**

(45) Date de publication et mention
de la délivrance du brevet:
**11.05.2016 Bulletin 2016/19**

(51) Int Cl.:
***B64C 13/16*** *(2006.01)* ***G05D 1/02*** *(2006.01)*

(21) Numéro de dépôt: **12188946.3**

(22) Date de dépôt: **18.10.2012**

(54) **Procede de guidage pour correction de trajectoire d'un aeronef**

Lenkverfahren zur Korrektur der Flugbahn eines Luftfahrzeugs

Steering method for correcting the trajectory of an aircraft

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.11.2011 FR 1103515**

(43) Date de publication de la demande:
**29.05.2013 Bulletin 2013/22**

(73) Titulaire: **Thales**
**92200 Neuilly Sur Seine (FR)**

(72) Inventeurs:
• **Riedinger, Marc**
**31830 PLAISANCE DU TOUCH (FR)**
• **Lissajoux, Sylvain**
**31000 TOULOUSE (FR)**
• **Bely, Anne-Sophie**
**31000 TOULOUSE (FR)**

(74) Mandataire: **Joubert, Cécile et al**
**Marks & Clerk France**
**Counseils en Propriete Industrielle**
**Immeuble "Visium"**
**22, avenue Aristide Briand**
**94117 Arcueil Cedex (FR)**

(56) Documents cités:
**FR-A1- 2 896 872        FR-A1- 2 920 232
US-A1- 2010 004 798**

EP 2 597 544 B1

**Description**

**DOMAINE DE L'INVENTION**

L'invention concerne les systèmes de guidage d'un aéronef et en particulier lorsque l'aéronef est en phase d'approche ou de navigation par rapport à une direction fixe qui lui est communiquée depuis l'extérieur et sur laquelle il doit s'aligner.

**ETAT DE LA TECHNIQUE**

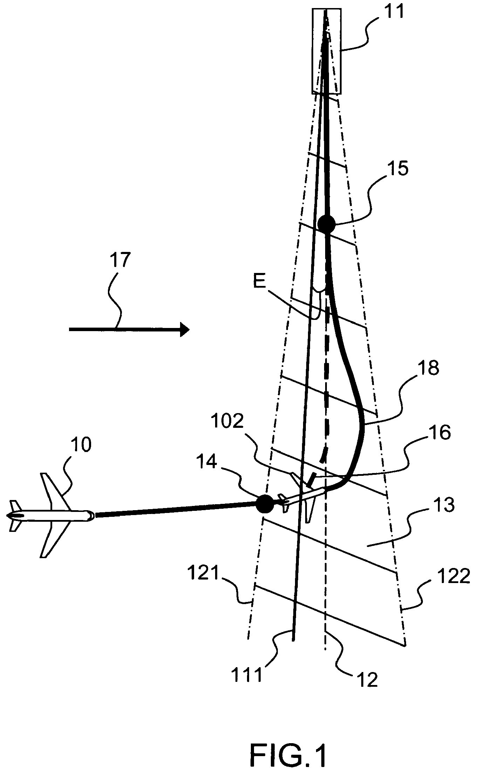

Comme illustré sur la figure 1, lorsque le système de guidage d'un aéronef 10 doit asservir la trajectoire de l'aéronef sur une direction fixe 12 qui correspond à une trajectoire d'alignement, l'asservissement s'opère en trois phases. Dans une première phase le pilote positionne l'aéronef de façon à voler selon une trajectoire ayant un angle connu et prédéterminé par rapport à la direction d'alignement. La direction d'alignement passe par rapport à un point déterminé 11.

Par exemple, l'information relative à la direction d'alignement 12 est issue d'une balise radio électrique 11 située au sol constituant ce point déterminé, et émettant un signal radiofréquence constituant un faisceau directif. L'ouverture angulaire utile 13 de ce faisceau, qui est utilisée pendant la phase d'alignement, est typiquement de plus ou moins quelques degrés, typiquement +/- 2.5° autour de la direction d'alignement 12. Les deux extrémités de cette ouverture angulaire sont désignées par les droites 121 et 122. La direction d'alignement 12 est communément dénommée « centre du faisceau ».

Ces balises sont par exemple du type radiophare d'alignement de piste selon l'acronyme LOC pour « Localizer »en langue anglaise. Ces balises LOC peuvent être par exemple celles d'un :

 o Radiophare d'alignement de piste VHF dénommé selon l'acronyme ILS pour « Instrument Landing System » en langue anglaise,

 o Système d'atterrissage hyperfréquence dénommé selon l'acronyme MLS pour « Microwave Landing System » en langue anglaise,

 o Système d'atterrissage par Satellite dénommé GLS pour « GNSS Landing system » en langue anglaise,

 o Système d'atterrissage avec performance LOC et guidage vertical dénommé selon l'acronyme LPV pour « Localizer performance with vertical Guidance » en langue anglaise.

Pour des systèmes par exemple de type GLS ou LPV, la balise est une pseudo-balise qui n'a pas d'existence physique. Il s'agit d'un point dont les coordonnées sont mémorisées dans une base de donnée. Le système FMS (Flight Managing System selon l'acronyme anglo-saxon pour système de gestion de vol), ou GPS, établit dans ce cas un peudo-faisceau à partir de cette donnée.

Ces balises sont par exemple des balises utilisées pour la navigation, où la direction d'alignement 12 est sélectionnée par le pilote à l'aide d'une commande embarquée. Ce système de navigation permet au pilote de s'aligner sur des radiales d'un phare omnidirectionnel et la balise est dénommé selon l'acronyme anglo-saxon VOR pour « Omni Directionnal Radio Range » en langue anglaise.

La première phase est identifiée comme la phase d'armement de la capture. Typiquement pendant cette phase le pilote positionne l'aéronef de façon à ce que sa trajectoire intercepte le faisceau directif avec un angle connu et prédéterminé communément dénommé angle d'interception, l'angle d'interception se définissant comme l'angle formé entre le cap de l'aéronef et la direction d'alignement définie par le faisceau directif. A partir de l'instant $t_0$ auquel l'aéronef, préalablement orienté selon l'angle d'interception correct, coupe la direction 121 ou 122, 121 dans l'exemple de la figure 1, au point 14 sur la figure 1, le processus d'alignement entre dans sa deuxième phase dénommée communément phase de capture, qui correspond à la phase d'alignement proprement dite. Au début de la phase d'alignement le système de guidage modifie la trajectoire de l'aéronef 14 en lui faisant effectuer un virage.

L'instant $t_0$ correspond par exemple au moment à partir duquel le détecteur situé sur l'aéronef 102, détectant un signal provenant de la balise, présente une réponse proportionnelle à l'écart angulaire E entre la droite 111 passant par la balise et l'aéronef 102, et la direction d'alignement 12. Le système de guidage commande le positionnement de l'aéronef de manière à annuler cet écart angulaire E.

Lorsque l'aéronef est établi sur une trajectoire alignée sur la direction 12, à partir du point 15 de la figure 1, le système de guidage passe dans la troisième phase communément dénommée mode suivi ou « track » selon la dénomination anglo-saxonne.

Le système de guidage comprend des algorithmes qui calculent l'angle de roulis de l'aéronef et sont communément dénommées lois de pilotage.

Idéalement lors de la phase d'alignement, la trajectoire 16 de l'aéronef 102 ne dépasse pas un angle de plus de typiquement 1 à quelques degrés par rapport à la direction 12 au cours de son virage.

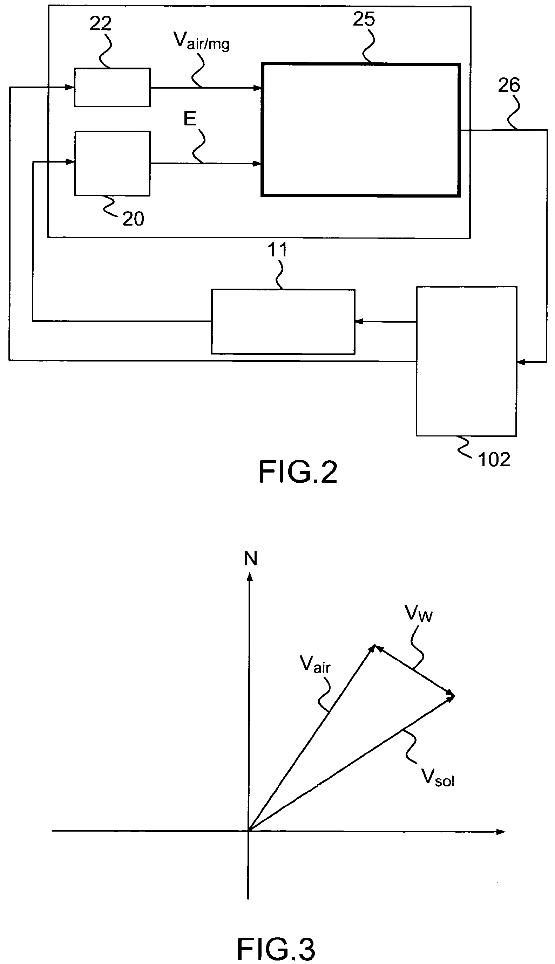

La figure 2 décrit la boucle d'asservissement de la commande de roulis de l'aéronef lors de la phase d'alignement avec le système de guidage selon un état de la technique. Ces systèmes de guidage d'aéronefs sont simplement équipés d'instruments de navigation 22 fonctionnant par rapport au Nord magnétique et par rapport à l'air ambiant, par exemple les systèmes de type centrale d'attitude et de cap selon l'acronyme AHRS pour « Attitude and référence system »en langue anglaise.

Les données accessibles dans ce cas au système de guidage sont :

- le vecteur vitesse par rapport à l'air environnant Vair/mg repéré par son angle par rapport au nord magnétique égal au cap magnétique CM de l'aéronef, déterminé par les instruments de navigation 22,

- l'écart angulaire E mesuré par un récepteur 20 situé sur l'aéronef.

Le système de guidage 25 calcule ainsi une commande de roulis 26 à partir de ces données. Les algorithmes utilisent dans ce cas des lois de pilotage classiques, typiquement dénommées LOC ou VOR (correspondant aux différents types de balises) pour asservir la trajectoire de l'aéronef sur le faisceau de la balise.

En présence de vent 17 (et particulièrement lorsque le vent est de direction travers par rapport à la direction d'alignement), les aéronefs équipés de tels systèmes de guidage vont s'écarter de la trajectoire optimale 16, et ainsi dépasser la valeur typique de 1 à quelques degrés correspondant à environ 2/5 de l'ouverture angulaire utile 13. Cette déviation de trajectoire, dénommée dépassement, conduit à une trajectoire non optimum 18 sur la figure 1, posant problème pour le contrôle aérien. Le système de guidage 25 ne sait donc pas anticiper la déviation de l'aéronef due au vent, ce qui de plus contraint le pilote à aider le système de guidage en réduisant l'angle d'interception, ce qui rallonge la trajectoire de l'aéronef avant l'armement. FR 2 920 232 décrit un procédé de guidage calculant une trajectoire prédite à partir des valeurs courantes de vitesses mesurées. US 2010/0004798 décrit une méthode de navigation vers un way point. Un but de l'invention est de pallier aux inconvénients précités en proposant un système de guidage d'un aéronef permettant de corriger en partie la déviation de la trajectoire de l'aéronef en cas de vent.

## DESCRIPTION DE L'INVENTION

L'invention a pour objet un procédé de guidage d'un aéronef pour corriger une déviation de trajectoire due à la présence de vent, comprenant une étape de calcul d'une commande de roulis de l'aéronef lors d'une phase d'alignement de la trajectoire de l'aéronef selon une direction d'alignement imposée passant par un point déterminé, à partir :

- d'un écart angulaire courant entre une droite passant par ledit point déterminé et l'aéronef d'une part et la direction d'alignement d'autre part et,
- d'une vitesse sol estimée courante de l'aéronef par rapport à un référentiel lié au sol,
- la vitesse sol estimée courante étant calculée à partir d'une vitesse air courante de l'aéronef par rapport à l'air environnant et d'une vitesse du vent mémorisée,
- la vitesse du vent mémorisée étant obtenue à partir d'au moins une vitesse du vent calculée à partir :

  - d'une première valeur d'une première vitesse égale à la vitesse dudit aéronef par rapport à un référentiel lié au sol provenant d'un système de navigation par satellites et,
  - d'une deuxième valeur d'une deuxième vitesse égale à la vitesse air par rapport à l'air environnant,
  - les première valeur et deuxième valeur étant prises en compte simultanément à au moins un instant antérieur ou égal à l'instant où l'aéronef débute la phase d'alignement.

Un avantage du procédé selon l'invention est la correction de la trajectoire de l'aéronef en prenant en compte la présence du vent pendant la phase d'alignement, à l'aide d'un système peu couteux de navigation par satellite. Un autre avantage de l'invention est que l'information concernant le vent est collectée antérieurement au début de la phase d'alignement, ce qui rend le système de guidage autonome par rapport aux données satellitaires pendant la phase d'alignement.

Avantageusement le procédé de guidage selon l'invention est caractérisé en ce que ladite vitesse estimée courante est égale à la somme vectorielle de la vitesse air courante et de la vitesse du vent mémorisée. Un tel calcul vectoriel permet un calcul précis de la vitesse estimée.

Avantageusement, le procédé de guidage selon l'invention est caractérisé en ce que la vitesse du vent mémorisée est obtenue à partir d'au moins une vitesse du vent déterminée à au moins un instant antérieur ou égal à l'instant où l'aéronef débute la phase d'alignement

Avantageusement, le procédé de guidage selon l'invention est caractérisé en ce que la vitesse du vent est égale à la différence vectorielle entre la première vitesse et la deuxième vitesse. Un tel calcul vectoriel permet un calcul précis de la vitesse du vent.

Dans un mode de réalisation, le procédé de guidage selon l'invention est caractérisé en ce que la vitesse du vent mémorisée est égale à la vitesse de vent calculée à l'instant où l'aéronef débute la phase d'alignement. Ainsi, la vitesse du vent mémorisée est obtenue sans qu'une mémorisation des vitesses de vent à des instants strictement antérieurs au début de la phase d'alignement soit nécessaire, ce qui simplifie le système de traitement de cette donnée.

Dans un mode de réalisation, le procédé de guidage selon l'invention est caractérisé en ce que la vitesse du vent mémorisé est le résultat d'un traitement numérique effectué à partir de vitesses du vent calculées sur une pluralité d'instants. Un tel traitement permet de prendre en compte l'historique de la vitesse du vent antérieurement au début de la phase d'engagement, ce qui permet d'obtenir une vitesse du vent estimée plus proche de la vitesse réelle.

Selon un mode de réalisation, le procédé de guidage selon l'invention est caractérisé en ce que le traitement numérique est une moyenne temporelle de vitesses du vent calculées à une pluralité d'instants.

Avantageusement, le procédé selon l'une l'invention est caractérisé en ce que l'étape de calcul utilise une donnée de déclinaison magnétique fournie par un système embarqué additionnel de manière à exprimer lesdites vitesses dans un même repère. La prise en compte de cette donnée permet un calcul vectoriel exact dans le cas où les vitesses Vair et Vsol ne sont pas obtenue directement dans le même repère.

Avantageusement, le procédé selon l'invention est caractérisé en ce que la direction d'alignement imposée est déterminée par une balise située au sol constituant le point déterminé qui émet un signal et qui génère un faisceau directif. Ainsi le procédé est compatible avec un système classique d'alignement en aéronautique utilisant des balises émettrices. La balise peut également être une pseudo-balise utilisée par exemple dans les systèmes GLS ouLPV décrit précédemment.

Avantageusement, le procédé selon l'invention est caractérisé en ce que l'instant où l'aéronef débute ladite phase d'alignement correspond à l'instant à partir duquel le détecteur du signal situé sur l'aéronef présente une réponse proportionnelle à l'écart angulaire.

Avantageusement, le procédé selon l'une l'invention est caractérisé en ce que l'étape de calcul est apte à calculer une commande de roulis à partir de la vitesse de l'aéronef par rapport à l'air en remplacement de la vitesse sol estimée courante de l'aéronef.

Avantageusement, le procédé selon l'invention est caractérisé en ce que lorsque les données provenant du système de navigation par satellites ne sont pas fournies par lesystème de navigation ou sont erronées, la vitesse sol estimée courante de l'aéronef est remplacée par la vitesse air courante de l'aéronef pour le calcul de la commande de roulis. L'avantage est que, dans le cas où le système de navigation par satellite ou le système additionnel ne fourniraient pas les données attendues, le système remplace la donnée Vsol-est(mg(t) par la vitesse Vair/mg(t) délivrée par l'instrument de navigation embarquée 22 et le calculateur effectue alors le calcul de la commande de roulis selon l'état de la technique classique décrit figure 2. Ainsi une donnée utilisable est toujours fournie au calculateur 41.

L'invention a également pour objet un système pour le guidage d'un aéronef apte à corriger une déviation de trajectoire due à la présence de vent comprenant

- un module de calcul d'une commande de roulis de l'aéronef lors d'une phase d'alignement de la trajectoire de l'aéronef selon une direction d'alignement imposée passant par un point déterminé, à partir :

  - d'un écart angulaire courant entre une droite passant par ledit point déterminé et l'aéronef d'une part et ladite direction d'alignement d'autre part , et
  - d'une vitesse sol estimée courante de l'aéronef par rapport à un référentiel lié au sol,

- un module de calcul 43 de la vitesse sol estimée courante de l'aéronef à partir d'une vitesse air courante de l'aéronef par rapport à l'air environnant et d'une vitesse du vent mémorisée,
- un module de calcul 44 de la vitesse du vent mémorisée à partir :

  - d'une première valeur d'une première vitesse égale à la vitesse par rapport à un référentiel lié au sol dudit aéronef provenant d'un système de navigation par satellites
  - et d'une deuxième valeur d'une deuxième vitesse égale à la vitesse air par rapport à l'air environnant,
  - les première valeur et deuxième valeur étant prises en compte simultanément à au moins un instant antérieur ou égal à l'instant où l'aéronef débute ladite phase d'alignement

D'autres caractéristiques, buts et avantages de la présente invention apparaîtront à la lecture de la description qui va suivre et des dessins annexés donnés à titre d'exemples non limitatifs et sur lesquels :

- La figure 1 déjà présentée décrit les trois phases d'approche de l'aéronef pour s'aligner sur une direction donnée, ainsi que la déviation de trajectoire de l'aéronef due à la présence d'un vent selon l'état de la technique.
- La figure 2 déjà présentée décrit la boucle d'asservissement de l'aéronef sur le système de guidage selon l'état de la technique.
- La figure 3 illustre la relation vectorielle entre la vitesse de l'aéronef par rapport à l'air, la vitesse de l'aéronef par rapport au sol et le vent.
- La figure 4 décrit le principe de l'invention.
- La figure 5 décrit un mode préféré de l'invention
- La figure 6 décrit un exemple d'implémentation du mode préféré de l'invention décrit figure 5

**DESCRIPTION DETAILLEE DE L'INVENTION**

En présence de vent 17, par exemple un vent de direction travers par rapport à la trajectoire de l'aéronef, le vecteur vitesse de l'aéronef par rapport à un référentiel lié au sol, Vsol, est différent du vecteur vitesse de l'aéronef par rapport à l'air environnant Vair. La figure 3 décrit la relation vectorielle entre ces différentes vitesses: Sur la figure 3 le vent 17 est défini par un vecteur vitesse Vw. On a :

$$Vsol = Vair + Vw$$

Pour intégrer la présence du vent, le système de guidage doit avoir connaissance du vecteur vitesse Vsol, car c'est Vsol qui doit être aligné sur la direction d'alignement 12 .

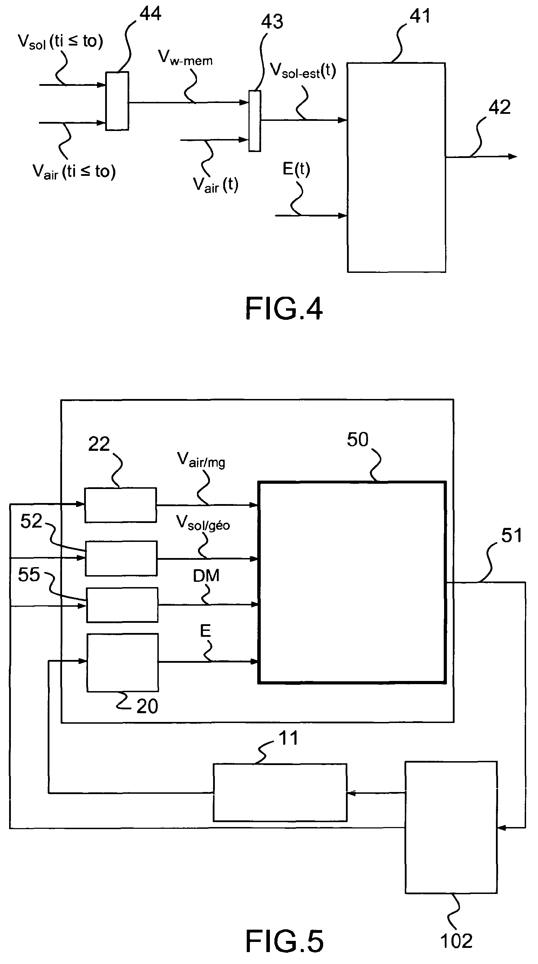

Le principe de l'invention est décrit figure 4. L'invention s'applique à tout type d'aéronef, tel qu'un avion, un hélicoptère ou un drone.

Le procédé permettant le calcul de la commande de roulis 42 à un instant t par le calculateur 41 est effectué à partir des données suivantes :

- l'écart angulaire E(t) ou écart angulaire courant similaire à celui utilisé dans l'état de la technique.
- une vitesse de l'aéronef par rapport au sol à l'instant t Vsol-est(t), cette vitesse courante étant une vitesse estimée calculée par le module de calcul 43 à partir de deux données :

    - la vitesse courante par rapport à l'air environnant Vair(t), identique à celle fournie au système de guidage 25 selon l'état de la technique.
    - une vitesse du vent mémorisée Vw/mem qui ne correspond pas à la vitesse courante du vent à l'instant t.

L'invention permet de corriger la trajectoire de l'aéronef en prenant en compte la présence de vent, en l'empêchant de trop dévier par rapport à sa trajectoire optimale.

Selon l'invention, la vitesse du vent mémorisée Vw/mem correspond à la vitesse du vent à au moins un instant antérieur à l'entrée de l'aéronef dans la phase d'alignement, calculée à l'aide de données issues d'un système de navigation par satellites. Un avantage du procédé selon l'invention est la correction de la trajectoire de l'aéronef en prenant en compte la présence du vent pendant la phase d'alignement, à l'aide d'un système peu couteux de navigation par satellite. Ainsi, il n'est pas nécessaire d'avoir recours à une centrale inertielle embarquée pour disposer de la vitesse de l'aéronef par rapport au sol. Cet instrument est couteux et tous les aéronefs ne sont pas équipés.

Le signal provenant d'un satellite peut être masqué, par exemple par les ailes lors du virage effectué au début de la phase d'alignement, ou par les rotors d'un hélicoptère. Donc, pour des raisons de sécurité, il est préférable de ne pas utiliser ces données satellite lorsque le pilote a sélectionné une approche ou un alignement basé sur une autre technologie (par exemple ILS,MLS).

La vitesse Vsol-est(t) est une vitesse estimée, à un instant t, à partir d'une vitesse de vent mesurée antérieurement à l'instant $t_0$ d'entrée de l'aéronef dans la phase d'alignement.

Vsol-est peut être déduite de la relation vectorielle :

$$Vsol\text{-}est\ (t)\ =\ Vair(t) + Vw/mem$$

Un autre avantage de l'invention est que l'information concernant le vent est collectée antérieurement au début de la phase d'alignement, ce qui rend le système de guidage autonome par rapport aux données satellitaires pendant la phase d'alignement.

5

La vitesse du vent Vw(ti) à un instant ti antérieur à $t_0$ est calculée par le module de calcul 44, préférentiellement à partir de la relation vectorielle:

$$Vw(ti) = Vsol(ti) - Vair(ti)$$

dans laquelle Vsol(ti) représente la vitesse de l'aéronef par rapport au sol à l'instant ti et Vair(ti) représente la vitesse de l'aéronef par rapport à l'air environnant à l'instant ti.

Pour le calcul de la vitesse du vent à l'instant ti Vw(ti), les vitesse vectorielles sol Vsol(ti) et air Vair(ti) de l'aéronef sont prises en compte simultanément. Selon une première option, la vitesse du vent mémorisée Vw/mem utilisée par le calculateur 41 est égale à la vitesse du vent à l'instant t0 auquel l'aéronef débute la phase d'alignement.

$$Vw/mem = Vw(t0)$$

Selon une deuxième option, la vitesse du vent mémorisée Vw/mem utilisée par le calculateur 41 est le résultat d'un traitement numérique effectué à partir des valeurs de vitesse du vent à différents instants.

Par exemple, la vitesse du vent mémorisée Vw/mem utilisée par le calculateur 41 est égale à une moyenne temporelle des valeurs des vitesses de vents à différents instants ti, i entier compris de 1 à n, ti étant antérieur à t0, comme illustré par la relation suivante :

$$Vw\text{-}mem \quad = \frac{1}{n} \cdot \sum_{i=1}^{n} Vw(ti)$$

Selon un autre exemple la vitesse du vent mémorisée Vw/mem utilisée par le calculateur 41 est égale à une moyenne utilisée par le calculateur 41 est égale à une moyenne temporelle continue de la vitesse du vent entre deux instant t1 et t2 antérieurs à t0, avec t1 antérieur à t2, comme illustré par la relation suivante :

$$Vw\text{-}mem \quad = \frac{1}{(t2-t1)} \cdot \int_{t1}^{t2} Vw(t)dt$$

La figure 5 décrit la boucle d'asservissement de la commande de roulis de l'aéronef sur le système de guidage selon l'invention selon un mode préféré. La vitesse Vsol(ti) est accessible via le système de navigation par satellites, et repérée par rapport au nord géographique..

La vitesse vectorielle Vair est repérée par rapport au nord magnétique, par le cap magnétique.

Le calcul exact de la vitesse du vent Vw par différence vectorielle nécessite donc de disposer des deux vecteurs vitesses air Vair et sol Vsol exprimés dans le même repère. A ces fins selon un mode préféré de l'invention on dispose de l'information de déclinaison magnétique DM permettant le passage d'un repère à l'autre, cette donnée étant fournie par un système embarqué tierce 55, comme par exemple le calculateur de gestion du vol ou FMS, selon acronyme anglo-saxon pour « Flight Management System ».

Le système de guidage 50 délivre la commande de roulis 51 à l'aéronef 10 et fonctionne selon le procédé de l'invention. Il reçoit les données suivantes :

- l'écart E tel que défini précédemment via un récepteur embarqué 20 qui reçoit un signal provenant d'une balise ou une pseudo balise 11,
- le vecteur vitesse Vair/mg, dont le module est la vitesse de l'aéronef par rapport à l'air environnant et dont l'orientation est définie par rapport au nord magnétique par le cap magnétique CM, ces données étant mesurées par des instruments de navigation classiques 22 embarqués sur l'aéronef,
- le vecteur vitesse de l'aéronef par rapport au sol Vsol/geo, dont le module est la vitesse de l'aéronef par rapport à un repère lié au sol et dont l'orientation est définie par rapport au nord géographique, ces données étant obtenue via récepteur 52 apte à recevoir un signal de navigation issu d'un satellite,
- la déclinaison magnétique DM fournie par un système tierce 55 embarqué, comme par exemple le FMS.

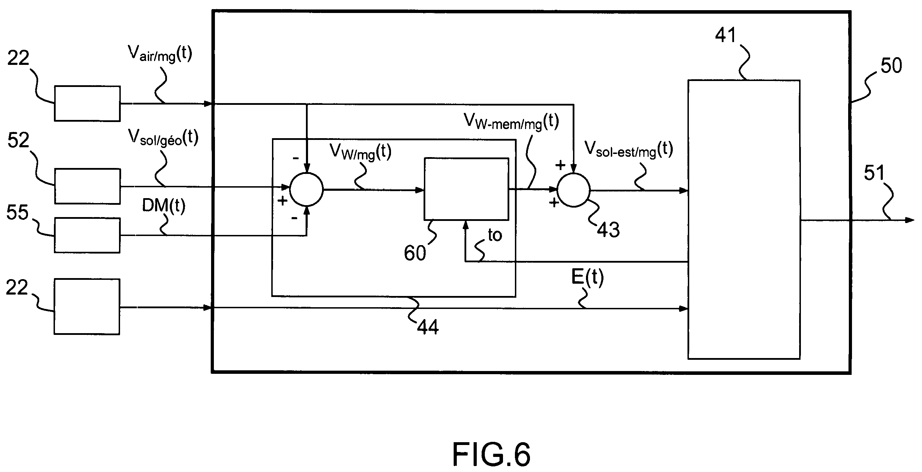

La figure 6 décrit un exemple d'implémentation du mode préféré décrit figure 5:

- la vitesse sol dans le repère magnétique Vsol/mg est calculée à partir de la vitesse sol dans le repère géographique Vsol/géo issu du récepteur du signal satellitaire 52 et de la déclinaison magnétique DM issu d'un système embarqué additionnel 55.

- la vitesse du vent dans le repère magnétique Vw/mg est calculée à partir de Vsol/mg et de Vair/mg issue de l'instrument de navigation 22 par la relation vectorielle :

$$Vw/mg = Vol/mg - Vair/mg$$

La vitesse du vent Vw/mg est ainsi calculée, stockée et éventuellement traitée dans un système 60.

Le calculateur 41 calcule dans quelle phase se trouve l'aéronef et détermine l'instant $t_0$ à partir duquel l'aéronef débute la phase d'alignement. A partir de cet instant le système 60 fige les données et délivre au module 43 une vitesse du vent mémorisée Vw-mem/mg.

Cette vitesse Vw-mem/mg calculée à partir de données collectées à des instants antérieurs à l'instant $t_0$ où l'aéronef débute la phase d'alignement s'affranchit ainsi de la disponibilité et de la précision du système de navigation par satellite et du système additionnel 55 fournissant la déclinaison magnétique DM pour la suite du guidage de l'aéronef.

Pendant la phase d'alignement, le module 43 calcule la vitesse Vsol-est/mg courante à partir de la formule vectorielle :

$$Vsol\text{-}est/mg\ (t) = Vair/mg(t) + VW\text{-}mem/mg$$

La donnée Vsol-est/mg(t) est fournie, ainsi que l'écart E(t) au calculateur 41 qui délivre la commande de roulis 51. Selon une première variante avantageuse, le calculateur 41 de la commande de roulis selon un aspect de l'invention est apte à calculer ladite commande de roulis à partir de ladite vitesse de l'aéronef par rapport à l'air en remplacement de ladite vitesse sol courante estimée de l'aéronef, selon l'état de la technique décrit figure 2. Les performances obtenues dans ce cas sont identiques à celle d'un système de guidage classique.

Selon une deuxième variante avantageuse, le calculateur 41 de la commande de roulis est un calculateur selon l'état de la technique utilisant des lois de pilotages classiques, par exemple de type LOC ou VOR.

Ces deux variantes présentent l'avantage que, dans le cas où le système de navigation par satellite ou le système additionnel 55 ne fourniraient pas les données attendues, le système remplace la donnée Vsol-est/mg(t) par la vitesse Vair/mg(t) délivrée par l'instrument de navigation embarquée 22 et le calculateur effectue alors le calcul de la commande de roulis selon l'état de la technique classique décrit figure 2. Ainsi une donnée utilisable est toujours fournie au calculateur 41.

Lorsque le système de navigation par satellite ou le système additionnel 55 fourniraient des données erronées, le calculateur 41 délivre une commande non optimale qui dégrade la trajectoire de l'aéronef. Selon une option la phase d'alignement s'effectue sous la surveillance du pilote qui peut choisir soit de reprendre la main soit de basculer sur un calcul classique de la commande de roulis.

La deuxième variante présente également l'avantage de mettre en oeuvre le procédé selon un aspect de l'invention sur un système de guidage selon l'état de la technique décrit figure 2, préexistant dans l'aéronef, sous la forme de l'ajout d'un système additionnel et compatible avec ce dernier. Dans l'exemple de la figure 6, le système additionnel comprend des modules 43 et 44, un récepteur 52 du signal satellitaire et un accès à l'information de déclinaison magnétique via par exemple une connexion au FMS 55.

**Revendications**

**1.** Procédé de guidage d'un aéronef (102) pour corriger une déviation de trajectoire due à la présence de vent, comprenant une étape de calcul d'une commande de roulis (42) de l'aéronef lors d'une phase d'alignement de la trajectoire de l'aéronef selon une direction d'alignement imposée (12) passant par un point déterminé (11), à partir :

- d'un écart angulaire (E) courant entre une droite (111) passant par ledit point déterminé et l'aéronef (102) d'une part et ladite direction d'alignement (12) d'autre part, et
- d'une vitesse sol estimée (Vsol-est) courante de l'aéronef par rapport à un référentiel lié au sol,
- ladite vitesse sol estimée (Vsol-est) courante étant calculée à partir d'une vitesse air (Vair) courante de l'aéronef par rapport à l'air environnant et d'une vitesse du vent mémorisée,
- ladite vitesse du vent mémorisée (Vw-mem) étant obtenue à partir d'au moins une vitesse du vent (Vw) calculée à partir :

- d'une première valeur d'une première vitesse (Vsol) égale à la vitesse dudit aéronef par rapport à un référentiel lié au sol provenant d'un système de navigation par satellites, et
- d'une deuxième valeur d'une deuxième vitesse (Vair) égale à ladite vitesse air par rapport à l'air environnant,
- lesdites première valeur et deuxième valeur étant prises en compte simultanément à au moins un instant antérieur ou égal à l'instant ($t_0$) où l'aéronef (102) débute ladite phase d'alignement.

2. Procédé de guidage selon la revendication 1 **caractérisé en ce que** ladite vitesse estimée courante (Vsol-est) est égale à la somme vectorielle de ladite vitesse air (vair) courante et de ladite vitesse du vent mémorisée (Vw-mem).

3. Procédé de guidage selon les revendications 1 à 3 **caractérisé en ce que** ladite vitesse du vent (Vw) est égale à la différence vectorielle entre ladite première vitesse (Vsol) et ladite deuxième vitesse (Vair).

4. Procédé de guidage selon l'une des revendications précédentes **caractérisé en ce que** ladite vitesse du vent mémorisée (Vw-mem) est égale à ladite vitesse de vent (Vw) calculée audit instant ($t_0$) où l'aéronef débute ladite phase d'alignement.

5. Procédé de guidage selon l'une des revendications 1 à 4 **caractérisé en ce que** ladite vitesse du vent mémorisée (Vw-mem) est le résultat d'un traitement numérique effectué à partir de vitesses du vent (Vw) calculées sur une pluralité d'instants (ti)

6. Procédé de guidage selon la revendication 6 **caractérisé en ce que** ledit traitement numérique est une moyenne temporelle de vitesses du vent (Vw) calculées à une pluralité d'instants (ti)

7. procédé selon l'une des revendications précédentes **caractérisé en ce que** ladite étape de calcul utilise une donnée de déclinaison magnétique (DM) fournie par un système embarqué additionnel (55) de manière à exprimer lesdites vitesses dans un même repère.

8. Procédé selon l'une des revendications précédentes **caractérisé en ce que** 25 ladite direction d'alignement imposée (12) est déterminée par une balise (11) située au sol constituant ledit point déterminé qui émet un signal et qui génère un faisceau directif (13).

9. Procédé selon la revendication 9 **caractérisé en ce que** l'instant où 30 l'aéronef débute ladite phase d'alignement correspond à l'instant à partir duquel le détecteur dudit signal situé sur l'aéronef présente une réponse proportionnelle audit écart angulaire (E)

10. Procédé selon l'une des revendications précédentes **caractérisé en ce que** ladite étape de calcul est apte à calculer une commande de roulis (42) à partir de ladite vitesse de l'aéronef par rapport à l'air (Vair) en remplacement de ladite vitesse sol estimée courante de l'aéronef (Vsol-est)

11. Procédé selon la revendication 11 **caractérisé en ce que** lorsque les données provenant dudit système de navigation par satellites ne sont pas fournies par ledit système de navigation ou sont erronées, ladite vitesse sol estimée (Vsol-est) courante de l'aéronef est remplacée par ladite vitesse air (Vair) courante de l'aéronef pour ledit calcul de ladite commande de roulis (42)

12. Système pour le guidage d'un aéronef (50) apte à corriger une déviation de trajectoire due à la présence de vent comprenant :

- un module de calcul (41) d'une commande de roulis (42) de l'aéronef lors d'une phase d'alignement de la trajectoire de l'aéronef selon une direction d'alignement imposée (12) passant par un point déterminé (11), à partir :

  - d'un écart angulaire (E) courant entre une droite (111) passant par ledit point déterminé et l'aéronef (102) d'une part et ladite direction d'alignement (12) d'autre part, et
  - d'une vitesse sol estimée (Vsol-est) courante de l'aéronef par rapport à un référentiel lié au sol,

- un module de calcul (43) de ladite vitesse sol estimée (Vsol-est) courante de l'aéronef à partir d'une vitesse air (Vair) courante de l'aéronef par rapport à l'air environnant et d'une vitesse du vent mémorisée,

- un module de calcul (44) de ladite vitesse du vent mémorisée à partir :

- d'une première valeur d'une première vitesse (Vsol) égale à la vitesse par rapport à un référentiel lié au sol dudit aéronef provenant d'un système de navigation par satellites, et
- d'une deuxième valeur d'une deuxième vitesse (Vair) égale à ladite vitesse air par rapport à l'air environnant,
- lesdites première valeur et deuxième valeur étant prises en compte simultanément à au moins un instant antérieur ou égal à l'instant ($t_0$) où l'aéronef (102) débute ladite phase d'alignement.

## Patentansprüche

1. Verfahren zum Lenken eines Luftfahrzeugs (102) zum Korrigierten einer Flugbahnabweichung aufgrund der Anwesenheit von Wind, das einen Schritt des Berechnens eines Rollbefehls (42) für das Luftfahrzeug in einer Ausrichtungsphase der Flugbahn des Luftfahrzeugs gemäß einer durch einen vorbestimmten Punkt (11) gehenden auferlegten Ausrichtungsrichtung (12) beinhaltet, auf der Basis:

- eines aktuellen Winkelabstands (E) zwischen einer durch den bestimmten Punkt und das Luftfahrzeug (102) gehenden Geraden (111) einerseits und der Ausrichtungsrichtung (12) andererseits, und
- einer aktuellen geschätzten Bodengeschwindigkeit (Vsol-est) des Luftfahrzeugs in Bezug auf ein Referenzsystem in Verbindung mit dem Boden,
- wobei die aktuelle geschätzte Bodengeschwindigkeit (Vsol-est) auf der Basis einer aktuellen Luftgeschwindigkeit (Vair) des Luftfahrzeugs mit Bezug auf die Umgebungsluft und einer gespeicherten Windgeschwindigkeit berechnet wird,
- wobei die gespeicherte Windgeschwindigkeit (Vw-mem) auf der Basis von wenigstens einer Windgeschwindigkeit (Vw) erhalten wird, berechnet auf der Basis:
- eines ersten Wertes einer ersten Geschwindigkeit (Vsol) gleich der Geschwindigkeit des Luftfahrzeugs mit Bezug auf ein Referenzsystem in Verbindung mit dem Boden, das von einem Satellitennavigationssystem kommt, und
- eines zweiten Wertes einer zweiten Geschwindigkeit (Vair) gleich der Luftgeschwindigkeit mit Bezug auf die Umgebungsluft,
- wobei der erste Wert und der zweite Wert gleichzeitig an wenigstens einem Zeitpunkt vor oder auf dem Zeitpunkt ($t_0$) berücksichtigt werden, an dem das Luftfahrzeug (102) mit der Ausrichtungsphase beginnt.

2. Lenkverfahren nach Anspruch 1, **dadurch gekennzeichnet, dass** die aktuelle geschätzte Geschwindigkeit (Vsol-est) gleich der Vektorsumme der aktuellen Luftgeschwindigkeit (Vair) und der gespeicherten Windgeschwindigkeit (Vw-mem) ist.

3. Lenkverfahren nach den Ansprüchen 1 bis 3, **dadurch gekennzeichnet, dass** die Windgeschwindigkeit (Vw) gleich der Vektordifferenz zwischen der ersten Geschwindigkeit (Vsol) und der zweiten Geschwindigkeit (Vair) ist.

4. Lenkverfahren nach einem der vorherigen Ansprüche, **dadurch gekennzeichnet, dass** die gespeicherte Windgeschwindigkeit (Vw-mem) gleich der berechneten Windgeschwindigkeit (Vw) zu dem Zeitpunkt ($t_0$) ist, an dem das Luftfahrzeug mit der Ausrichtungsphase beginnt.

5. Lenkverfahren nach einem der Ansprüche 1 bis 4, **dadurch gekennzeichnet, dass** die gespeicherte Windgeschwindigkeit (Vw-mem) das Ergebnis einer digitalen Verarbeitung ist, die auf der Basis von an mehreren Zeitpunkten (ti) berechneten Windgeschwindigkeiten (Vw) ausgeführt wurde.

6. Lenkverfahren nach Anspruch 6, **dadurch gekennzeichnet, dass** die digitale Verarbeitung ein zeitliches Mittel von an mehreren Zeitpunkten (ti) berechneten Windgeschwindigkeiten (Vw) ist.

7. Verfahren nach einem der vorherigen Ansprüche, **dadurch gekennzeichnet, dass** der Berechnungsschritt ein von einem zusätzlichen an Bord befindlichen System (55) geliefertes magnetisches Deklinationsdatenelement (DM) benutzt, um die Geschwindigkeiten in einem selben Bezugspunkt auszudrücken.

8. Verfahren nach einem der vorherigen Ansprüche, **dadurch gekennzeichnet, dass** die auferlegte Ausrichtungsrichtung (12) von einer am Boden befindlichen, den bestimmten Punkt bildenden Bake (11) ermittelt wird, die ein

**EP 2 597 544 B1**

Signal aussendet und einen Richtungsstrahl (13) erzeugt.

9. Verfahren nach Anspruch 9, **dadurch gekennzeichnet, dass** der Zeitpunkt, an dem das Luftfahrzeug mit der Ausrichtungsphase beginnt, dem Zeitpunkt entspricht, ab dem der auf dem Luftfahrzeug befindliche Detektor des Signals eine auf den Winkelabstand (E) proportionale Reaktion präsentiert.

10. Verfahren nach einem der vorherigen Ansprüche, **dadurch gekennzeichnet, dass** der Berechnungsschritt einen Rollbefehl (42) auf der Basis der Geschwindigkeit des Luftfahrzeugs mit Bezug auf die Luft (Vair) statt der aktuellen geschätzten Bodengeschwindigkeit des Luftfahrzeugs (Vsol-est) berechnen kann.

11. Verfahren nach Anspruch 11, **dadurch gekennzeichnet, dass**, wenn die von dem Satellitennavigationssystem kommenden Daten nicht von dem Navigationssystem geliefert werden oder fehlerhaft sind, die aktuelle geschätzte Bodengeschwindigkeit (Vsol-est) des Luftfahrzeugs durch die aktuelle Luftgeschwindigkeit (Vair) des Luftfahrzeugs für die Berechnung des Rollbefehls (42) ersetzt wird.

12. System zum Lenken eines Luftfahrzeugs (50), das eine Flugbahnabweichung aufgrund der Anwesenheit von Wind korrigierten kann, das Folgendes umfasst:

    - ein Modul (41) zum Berechnen eines Rollbefehls (42) für das Luftfahrzeug in einer Ausrichtungsphase der Flugbahn des Luftfahrzeugs gemäß einer durch einen vorbestimmten Punkt (11) gehenden auferlegten Ausrichtungsrichtung (12) auf der Basis:
    - eines aktuellen Winkelabstands (E) zwischen einer durch den vorbestimmten Punkt und das Luftfahrzeug (102) gehenden Geraden (111) einerseits und der Ausrichtungsrichtung (12) andererseits, und
    - einer aktuellen geschätzten Bodengeschwindigkeit (Vsol-est) des Luftfahrzeugs mit Bezug auf ein Referenzsystem in Verbindung mit dem Boden,
    - ein Modul (43) zum Berechnen der aktuellen geschätzten Bodengeschwindigkeit (Vsol-est) des Luftfahrzeugs auf der Basis einer aktuellen Luftgeschwindigkeit (Vair) des Luftfahrzeugs mit Bezug auf die Umgebungsluft und eine gespeicherte Windgeschwindigkeit,
    - ein Modul (44) zum Berechnen der gespeicherten Windgeschwindigkeit auf der Basis:
    - eines ersten Wertes einer ersten Geschwindigkeit (Vsol) gleich der Geschwindigkeit mit Bezug auf ein mit dem Boden verbundenes Referenzsystem des Luftfahrzeugs, das von einem Satellitennavigationssystem kommt, und
    - eines zweiten Wertes einer zweiten Geschwindigkeit (Vair) gleich der Luftgeschwindigkeit in Bezug auf die Umgebungsluft,
    - wobei der erste Wert und der zweite Wert gleichzeitig an wenigstens einem Zeitpunkt vor oder auf dem Zeitpunkt ($t_0$) berücksichtigt werden, an dem das Luftfahrzeug (102) mit der Ausrichtungsphase beginnt.

**Claims**

1. Guiding method for an aircraft (102) in order to correct a trajectory deviation resulting from the presence of wind, comprising a step of calculation of a rolling command (42) of the aircraft during a phase for alignment of the trajectory of the aircraft in an imposed alignment direction (12) which goes through a predetermined point (11), on the basis of:

    - a current angular distance (E) between a straight line (111) which goes through the predetermined point and the aircraft (102), on the one hand, and the alignment direction (12), on the other hand, and
    - a current estimated ground speed (Vsol-est) of the aircraft relative to a reference system which is connected to the ground,
    - the current estimated ground speed (Vsol-est) being calculated based on a current air speed (Vair) of the aircraft relative to the surrounding air and a stored wind speed,
    - the stored wind speed (Vw-mem) being obtained from at least one speed of the wind (Vw) calculated from:
    - a first value of a first speed (Vsol) which is equal to the speed of the aircraft relative to a reference system which is connected to the ground originating from a satellite navigation system, and
    - a second value of a second speed (Vair) which is equal to the air speed relative to the surrounding air,
    - the first value and second value being taken into account simultaneously at least at one time prior to or equal to the time ($t_0$) at which the aircraft (102) begins the alignment phase.

2. Guiding method according to claim 1, **characterised in that** the estimated current speed (Vsol-est) is equal to the vector sum of the current air speed (Vair) and the stored wind speed (Vw-mem).

3. Guiding method according to claims 1 to 3, **characterised in that** the speed of the wind (Vw) is equal to the vector difference between the first speed (Vsol) and the second speed (Vair).

4. Guiding method according to any one of the preceding claims, **characterised in that** the stored wind speed (Vw-mem) is equal to the calculated wind speed (Vw) at the time ($t_o$) at which the aircraft begins the alignment phase.

5. Guiding method according to any one of claims 1 to 4, **characterised in that** the stored wind speed (Vw-mem) is the result of a numerical processing operation carried out based on wind speeds (Vw) calculated over a plurality of times (ti).

6. Guiding method according to claim 6, **characterised in that** the numerical processing operation is a temporal mean of wind speeds (Vw) calculated at a plurality of times (ti).

7. Method according to any one of the preceding claims, **characterised in that** the calculation step uses magnetic declination data (DM) provided by an additional on-board system (55) in order to express the speeds in the same reference system.

8. Method according to any one of the preceding claims, **characterised in that** the imposed alignment direction (12) is determined by a balise (11) which is located on the ground and which constitutes the predetermined point which transmits a signal and which generates a directional beam (13).

9. Method according to claim 9, **characterised in that** the time at which the aircraft begins the alignment phase corresponds to the time from which the detector of the signal located on the aircraft has a response which is proportional to the angular distance (E).

10. Method according to any one of the preceding claims, **characterised in that** the calculation step is capable of calculating a rolling command (42) from the speed of the aircraft relative to the air (Vair) in place of the current estimated ground speed of the aircraft (Vsol-est).

11. Method according to claim 11, **characterised in that**, when the data originating from the satellite navigation system are not provided by the navigation system or are incorrect, the current estimated ground speed (Vsol-est) of the aircraft is replaced by the current air speed (Vair) of the aircraft for the calculation of the rolling command (42).

12. Aircraft guiding system (50) which is capable of correcting a trajectory deviation resulting from the presence of wind, comprising:

    - a module (41) for calculating a rolling command (42) of the aircraft during a phase for alignment of the trajectory of the aircraft in an imposed alignment direction (12) which goes through a predetermined point (11), on the basis of:
    - a current angular distance (E) between a straight line (111) which goes through the predetermined point and the aircraft (102), on the one hand, and the alignment direction (12), on the other hand, and
    - a current estimated ground speed (Vsol-est) of the aircraft relative to a reference system which is connected to the ground,
    - a module (43) for calculating the current estimated ground speed (Vsol-est) of the aircraft from a current air speed (Vair) of the aircraft relative to the surrounding air and a stored wind speed,
    - a module (44) for calculating the stored wind speed from:
    - a first value of a first speed (Vsol) which is equal to the speed of the aircraft relative to a reference system which is connected to the ground originating from a satellite navigation system, and
    - a second value of a second speed (Vair) which is equal to the air speed relative to the surrounding air,
    - the first value and second value being taken into account simultaneously at least at one time prior to or equal to the time ($t_o$) at which the aircraft (102) begins the alignment phase.

FIG.1

FIG.2

FIG.3

$V_{sol}(t_i \leq t_o)$

44

$V_{w\text{-}mem}$

43

$V_{sol\text{-}est}(t)$

41

42

$V_{air}(t_i \leq t_o)$

$V_{air}(t)$

$E(t)$

**FIG.4**

22

$V_{air/mg}$

50

52

$V_{sol/géo}$

55

DM

E

51

20

11

102

**FIG.5**

FIG.6

EP 2 597 544 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2920232

- US 20100004798 A